# EUROPÄISCHE PATENTSCHRIFT

(11) **EP 3 246 728 B1**
(45) Veröffentlichungstag und Bekanntmachung des Hinweises auf die Patenterteilung: **31.07.2019**
(21) Anmeldenummer: 17168621.5
(22) Anmeldetag: 28.04.2017
(51) Int. Cl.: G06K 7/10, G01S 17/42, G01S 5/02, G01S 13/50, G01S 13/75, G01S 13/86

(54) **POSITIONSBESTIMMUNGSVORRICHTUNG**
POSITION DETERMINATION DEVICE
DISPOSITIF DE DÉTERMINATION DE POSITION

(30) Priorität: 10.05.2016 DE 102016108642
(43) Veröffentlichungstag der Anmeldung: 22.11.2017
(73) Patentinhaber: SICK AG, 79183 Waldkirch/Breisgau (DE)
(72) Erfinder: BEINSCHOB, Patric, 22043 Hamburg (DE); RAPP, Christian, 22359 Hamburg (DE)
(74) Vertreter: Manitz Finsterwald Patent- und Rechtsanwaltspartnerschaft mbB

(56) Entgegenhaltungen:
- N. J. LAVIGNE ET AL: "Towards underground mine drift mapping with RFID", ELECTRICAL&COMPUTER ENGINEERING (CCECE), 2012 25TH IEEE CANADIAN CONFERENCE ON, 1. Mai 2010 (2010-05-01), Seiten 1-6, XP055382745, ISSN: 0840-7789, DOI: 10.1109/CCECE.2010.5575165 ISBN: 978-1-4673-1431-2
- PHILIPP VORST ET AL: "Fully autonomous trajectory estimation with long-range passive RFID", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3. Mai 2010 (2010-05-03), Seiten 1867-1872, XP031743745, ISBN: 978-1-4244-5038-1

## Beschreibung

Die Erfindung betrifft eine Positionsbestimmungsvorrichtung zur Positionsbestimmung zumindest eines RFID-Tags, mit einem RFID-Leser und einer Steuereinrichtung, wobei die Steuereinrichtung ausgebildet ist, mittels des RFID-Lesers ein Funksignal auszusenden, welches zumindest einen RFID-Tag zur Aussendung eines Antwortsignals anregt.

Vorrichtungen zum Auslesen von RFID-Tags sind grundsätzlich bekannt und dienen beispielsweise dazu, die mit den RFID-Tags versehenen Gegenstände zu identifizieren.

Insbesondere können Waren mit RFID-Tags gekennzeichnet sein, um die Waren zu identifizieren und zu orten. Die örtliche Erfassung von Waren, die mit RFID-Tags gekennzeichnet sind, erfolgt häufig mittels ortsfester Lesetore. Diese Lesetore können beispielsweise an ein Ein- und Ausgängen von Lagerhallen angeordnet sein.

Nachteilig an solchen Lesetoren ist, dass zwar der Warenbestand in einer Lagerhalle ermittelt werden kann. Die exakte Position der jeweiligen Waren (oder des die Waren kennzeichnenden RFID-Tags) ist innerhalb der Lagerhalle aber unbekannt.

Bei der Positionsermittlung von RFID-Tags ergibt sich zudem das Problem, dass eine genaue Ortung des RFID-Tags im Empfangsbereich des RFID-Lesers nur schwer möglich ist. Zudem werden aus Kostengründen häufig passive RFID-Tags verwendet, die nur in Ansprechen auf ein Funksignal (oder generell ein Anregungssignal) des RFID-Lesers ein Antwortsignal aussenden können. Das Zeitverhalten zwischen dem Funksignal und dem Antwortsignal kann dabei nicht genauer beschrieben werden, so dass sich passive RFID-Tags z.B. nicht für Time-Of-Flight-Messungen (Signallaufzeit-Messungen) zur Entfernungsmessung verwenden lassen.

Aus Lavigne et al. "Towards underground mine drift mapping with RFID (CCECE, 2010 23rd Canadian Conference on. IEEE, 2010, S. 1-6) ist eine Vorrichtung gemäß dem Oberbegriff des Anspruchs 1 bekannt. In Vorst et al. "Fully autonomous trajectory estimation with long-range passive RFID (ICRA, 2010 IEEE International Conference on. IEEE, 2010, S. 1867-1872) wird die Verwendung von RFID-Messungen nach Art eines "Fingerabdrucks" beschrieben, um bereits mittels einer Vorrichtung besuchte Positionen wiederzuerkennen.

Es ist die der Erfindung zugrundeliegende Aufgabe, eine Positionsbestimmungsvorrichtung anzugeben, die es ermöglicht, passive RFID-Tags zu erfassen und die Positionen der RFID-Tags mit hoher Geschwindigkeit und Genauigkeit zu ermitteln.

Diese Aufgabe wird durch eine Positionsbestimmungsvorrichtung gemäß Anspruch 1 gelöst. Die Positionsbestimmungsvorrichtung ist von einer Ursprungsposition aus an verschiedene Orte bewegbar. Die Steuereinrichtung ist ausgebildet,
- an zumindest zwei verschiedenen Orten ein jeweiliges Funksignal auszusenden und das jeweilige Antwortsignal oder die jeweiligen Antwortsignale zu empfangen und
- anhand eines Abstands der zumindest zwei verschiedenen Orte und anhand der Antwortsignale, welche durch die Funksignale angeregt wurden, die von den zumindest zwei verschiedenen Orten aus ausgesendet wurden, eine Relativposition und eine relative Ausrichtung der Positionsbestimmungsvorrichtung zu der Ursprungsposition und eine Relativposition des RFID-Tags zu der Ursprungsposition zu bestimmen.

Die erfindungsgemäße Positionsbestimmungsvorrichtung zeichnet sich dadurch aus, dass der RFID-Leser ausgebildet ist, Funksignale in verschiedene begrenzte Raumrichtungen abzugeben und Antwortsignale aus verschiedenen begrenzten Raumrichtungen zu empfangen.

Die Erfindung macht sich die Erkenntnis zunutze, dass durch eine Bewegung der Vorrichtung und das Anregen der RFID-Tags von verschiedenen Positionen aus verschiedene Antwortsignale eines jeweiligen RFID-Tags empfangen werden können, wobei anhand der Antwortsignale auf eine Relativposition des RFID-Tags relativ zu der Positionsbestimmungsvorrichtung geschlossen werden kann. Anhand der Relativposition und der Bewegung der Positionsbestimmungsvorrichtung kann somit auch die Ausrichtung der Positionsbestimmungsvorrichtung bestimmt werden.

Hierbei sind initial sowohl die Position der Vorrichtung als auch die Position des RFID-Tags unbekannt. Die initiale Position der Positionsbestimmungsvorrichtung kann dabei als Ursprungsposition definiert werden.

Die Antwortsignale können sich beispielsweise in ihrer Richtung und/oder ihrer Stärke unterscheiden, so dass aus den Antwortsignalen die Relativposition des RFID-Tags bestimmt werden kann.

Ein jeweiliger RFID-Tag kann in dem Antwortsignal eine Identifikation übertragen, die es ermöglicht, verschiedene Antwortsignale jeweils demselben (d.h. dem korrekten) RFID-Tag zuzuordnen. Die Identifikation kann dauerhaft in dem RFID-Tag gespeichert sein. Eine Position des RFID-Tags ist in dem Antwortsignal insbesondere nicht enthalten.

Unter RFID (Radio Frequency Identification) ist eine Technik zum berührungslosen Identifizieren von Objekten mittels Funkwellen zu verstehen. Der RFID-Leser kann zur Identifikation des RFID-Tags ein Funksignal, d.h. insbesondere ein elektromagnetisches Feld, erzeugen. Der RFID-Tag wird diesem Funksignal ausgesetzt und entnimmt dem Funksignal Energie, um das Antwortsignal auszusenden. Bei dem zumindest einen RFID-Tag kann es sich um einen passiven RFID-Tag handeln.

Das Funksignal und das Antwortsignal können im Wesentlichen dieselbe Frequenz aufweisen. Insbesondere kann die verwendete Frequenz im Bereich zwischen 125 kHz und 875 kHz, im Bereich von 13,56 MHz, im Bereich von 865 bis 869 MHz oder im Bereich von 950 MHz liegen. Die Frequenz kann auch im Bereich von 2,45 GHz und 5,8 GHz angesiedelt sein.

Mit der Positionsbestimmungsvorrichtung gemäß der Erfindung kann auch eine Positionsbestimmung mehrerer RFID-Tags vorgenommen werden. Hierbei wird mittels des RFID-Lesers ein Funksignal ausgesendet, welches die mehreren RFID-Tags zur Aussendung eines jeweiligen Antwortsignals anregt. Zudem wird die Positionsbestimmungsvorrichtung von einer Ursprungsposition aus an verschiedene Orte bewegt, wobei an zumindest zwei verschiedenen Orten ein jeweiliges Funksignal an die mehreren RFID-Tags ausgesendet wird und die jeweiligen Antwortsignale der jeweiligen RFID-Tags empfangen werden. Anhand eines Abstands der zumindest zwei verschiedenen Orte und anhand der Antwortsignale, welche durch die Funksignale angeregt wurden, die von verschiedenen Orten aus ausgesendet wurden, können anschließend Relativpositionen und eine jeweilige relative Ausrichtung der Positionsbestimmungsvorrichtung bezüglich der Ursprungsposition und Relativpositionen der mehreren RFID-Tags zu der Ursprungsposition bestimmt werden.

Bei der Positionsbestimmungsvorrichtung kann es sich beispielsweise um ein selbstfahrendes Fahrzeug (AGV - Automated Guided Vehicle), um eine fliegende Drohne, aber auch um ein von Menschen gefahrenes Fahrzeug, wie einen Gabelstapler, handeln.

Im Falle eines selbstfahrenden Fahrzeugs oder einer Drohne kann die Erfassung der RFID-Tags vollständig automatisch erfolgen, indem die Positionsbestimmungsvorrichtung automatisch navigiert.

Vorteilhafte Weiterbildungen der Erfindung sind der Beschreibung, der Zeichnung und den Unteransprüchen zu entnehmen.

Gemäß einer ersten vorteilhaften Ausführungsform umfasst die Positionsbestimmungsvorrichtung eine Bewegungsbestimmungsvorrichtung, insbesondere einen Laserscanner und/oder ein Odometer. Die Bewegungsbestimmungsvorrichtung dient der Messung der Eigenbewegung der Positionsbestimmungsvorrichtung. Hierzu kann beispielsweise der Laserscanner wiederholt Abstände zu verschiedenen Objekten in der Umgebung ermitteln, wobei anhand von Abstandsänderungen die Bewegung der Positionsbestimmungsvorrichtung ermittelt werden kann. Alternativ oder zusätzlich kann mittels eines Odometers, welches z.B. Umdrehungen eines Rades der Positionsbestimmungsvorrichtung erfasst, die Bewegung der Positionsbestimmungsvorrichtung gemessen werden. Anstelle von oder zusätzlich zu dem Odometer und/oder dem Laserscanner können zu diesem Zweck auch eine Ultraschallsensorik, eine Radarabstandssensorik, eine induktive Näherungssensorik, eine Einheit zur Funklokalisierung und/oder eine Inertiale Messeinheit (inertial measurement unit - IMU) in der Bewegungsbestimmungsvorrichtung umfasst sein. Bevorzugt kann die Bewegungsbestimmungsvorrichtung auch einen Kompass und/oder ein Gyroskop und dergleichen umfassen, um eine Ausrichtung der Positionsbestimmungsvorrichtung zu bestimmen.

Bevorzugt verwendet die Steuereinrichtung die gemessene Bewegung der Positionsbestimmungsvorrichtung zur Berechnung der Relativposition. Durch die Messung der Bewegung kann beispielsweise der Abstand oder ein Richtungsvektor zwischen zwei verschiedenen Orten bekannt sein, an welchen die Positionsbestimmungsvorrichtung jeweils ein Funksignal ausgesendet hat. Dann kann die Position des RFID-Tags beispielsweise mittels Triangulation bestimmt werden.

Gemäß einer weiteren vorteilhaften Ausführungsform umfasst die Positionsbestimmungsvorrichtung eine Abstandsbestimmungseinrichtung, insbesondere einen Laserscanner, welcher Abstände zu Objekten in der Umgebung der Positionsbestimmungsvorrichtung ermittelt. Die Abstandsbestimmungseinrichtung kann dazu dienen, eine Kollision der Positionsbestimmungsvorrichtung mit Objekten zu verhindern. Wird beispielsweise ein Laserscanner als Abstandsbestimmungseinrichtung verwendet, kann derselbe Laserscanner auch als Bewegungsbestimmungsvorrichtung dienen. Anhand von Messdaten der Abstandsbestimmungseinrichtung kann eine Plausibilisierung einer ermittelten Relativposition erfolgen. Falls an der ermittelten Position eines RFID-Tags kein Objekt vorhanden ist, kann eine jeweilige Berechnung der Relativposition verworfen werden. Andererseits kann das Vorhandensein eines Objekts an einer ermittelten Position eines RFID-Tags die ermittelte Position bestätigen.

Der RFID-Leser ist erfindungsgemäß ausgebildet, Funksignale in verschiedene begrenzte Raumrichtungen abzugeben und Antwortsignale aus verschiedenen begrenzten Raumrichtungen zu empfangen und die Richtung der Antwortsignale zu ermitteln, so dass die Relativposition auf einfachere Weise bestimmt werden kann. Erfindungsgemäß ist der RFID-Leser schwenkbar und/oder bewegbar an der Positionsbestimmungsvorrichtung angebracht, oder dazu ausgebildet, mehrere Antennen für eine Abstrahlung in verschiedene begrenzte Raumrichtungen und/oder ein Empfangen aus verschiedenen begrenzten Raumrichtungen geeignet zu verschalten.

Bevorzugt umfasst der RFID-Leser eine Antenne mit einer Richtcharakteristik. Dies bedeutet, die Antenne weist einen vorbestimmten Antennengewinn auf. Aufgrund der Richtcharakteristik kann die Richtung, in welche das Funksignal ausgesendet und aus welcher das Antwortsignal empfangen wird, genauer bestimmt werden. Alternativ oder zusätzlich kann auch eine omnidirektionale Antenne verwendet werden.

Besonders bevorzugt ist die Steuereinrichtung ausgebildet, aus einer Bewegung der Positionsbestimmungsvorrichtung und aus den Antwortsignalen ein Simultaneous-Localisation-and-Mapping-Problem (SLAM-Problem) zu erstellen und das Simultaneous-Localisation-and-Mapping-Problem zu lösen, um die Relativposition und die relative Ausrichtung der Positionsbestimmungsvorrichtung und die Relativposition des RFID-Tags zu der Ursprungsposition zu bestimmen.

Unter einem SLAM-Problem wird vorliegend ein Problem verstanden, bei dem initial sowohl die Position und Ausrichtung der Positionsbestimmungsvorrichtung als auch die Position des RFID-Tags unbekannt ist. Beim Lösen des SLAM-Problems wird gleichzeitig die Position und Ausrichtung der Positionsbestimmungsvorrichtung und die Position des RFID-Tags bestimmt.

Gemäß einer weiteren vorteilhaften Ausführungsform ist die Steuereinrichtung ausgebildet, das Simultaneous-Localisation-and-Mapping-Problem anhand einer Graph-basierten Methode zu lösen. Bei einer solchen Graph-basierten Methode können Knoten (nodes) des Graphen der Ausrichtung (d.h. der sogenannten Pose) der Positionsbestimmungsvorrichtung entsprechen. Die Knoten können durch Kanten (edges) verbunden sein, wobei die Kanten Beschränkungen der Ausrichtung der Positionsbestimmungsvorrichtung angeben.

Alternativ oder zusätzlich können auch Kalman-Filter, Partikel-Filter und/oder Informationsfilter zur Lösung des Simultaneous-Localisation-and-Mapping-Problems herangezogen werden. Bei dem SLAM-Problem handelt es sich bevorzugt um ein Online-SLAM-Problem, welches inkrementell aufgrund neuer Antwortsignale verändert wird.

Gemäß einer weiteren vorteilhaften Ausführungsform ist die Steuereinrichtung ausgebildet, eine Karte zu erstellen, die die Position des zumindest einen RFID-Tags und bevorzugt von Objekten in der Umgebung der Positionsbestimmungsvorrichtung zeigt, wobei die Karte bei der Navigation der Positionsbestimmungsvorrichtung verwendet wird. Die Karte kann bei Bewegungen der Positionsbestimmungsvorrichtung jeweils weiter ergänzt werden.

In die Karte können beispielsweise Daten der Abstandsbestimmungseinrichtung, der Bewegungsbestimmungsvorrichtung und die ermittelten Relativpositionen zu den RFID-Tags (d.h. die RFID-Tags selbst) eingetragen werden. Die Steuereinrichtung kann die Positionsbestimmungsvorrichtung derart navigieren, dass die Positionsbestimmungsvorrichtung jeweils einen ausreichenden Abstand zu sämtlichen in der Karte eingetragenen Objekten (z.B. Wänden) und RFID-Tags einhält.

Gemäß einer weiteren vorteilhaften Ausführungsform bewegt sich die Positionsbestimmungvorrichtung autonom und die Steuereinrichtung ist ausgebildet, die Positionsbestimmungvorrichtung an die zumindest zwei verschiedenen Orte zu bewegen. Wie erwähnt kann es sich bei der Positionsbestimmungsvorrichtung beispielsweise um ein selbstfahrendes Fahrzeug (AGV - Automated Guided Vehicle) oder um eine fliegende Drohne handeln. Dabei kann die Steuereinrichtung ausgebildet sein, die Positionsbestimmungvorrichtung selbstständig an verschiedene Orte zu navigieren.

Weiterer Gegenstand der Erfindung ist ein Verfahren zur Positionsbestimmung zumindest eines RFID-Tags, wobei mittels eines RFID-Lesers ein Funksignal ausgesendet wird, welches zumindest einen RFID-Tag zur Aussendung eines Antwortsignals anregt. Das Verfahren zeichnet sich dadurch aus, dass
- eine Positionsbestimmungsvorrichtung, welche den RFID-Leser trägt, an verschiedene Orte bewegt wird,
- an zumindest zwei verschiedenen Orten ein jeweiliges Funksignal ausgesendet wird und das jeweilige Antwortsignal oder die jeweiligen Antwortsignale empfangen wird/werden und
- anhand der Antwortsignale eine Relativposition und eine relative Ausrichtung der Positionsbestimmungsvorrichtung zu dem RFID-Tag bestimmt werden.

Die zu der erfindungsgemäßen Positionsbestimmungsvorrichtung getroffenen Aussagen, insbesondere hinsichtlich Vorteilen und bevorzugten Ausführungsformen, gelten für das erfindungsgemäße Verfahren entsprechend.

Gemäß einer vorteilhaften Ausführungsform des erfindungsgemäßen Verfahrens wird mittels einer Bewegungsbestimmungsvorrichtung eine Messung der Bewegung der Positionsbestimmungsvorrichtung vorgenommen. Die Bewegungsbestimmungsvorrichtung kann somit eine Eigenbewegung der Positionsbestimmungsvorrichtung ermitteln. Die Bewegungsbestimmungsvorrichtung kann einen Laserscanner und/oder ein Odometer umfassen.

Nachfolgend wird die Erfindung rein beispielhaft unter Bezugnahme auf die Zeichnung beschrieben. Es zeigt:

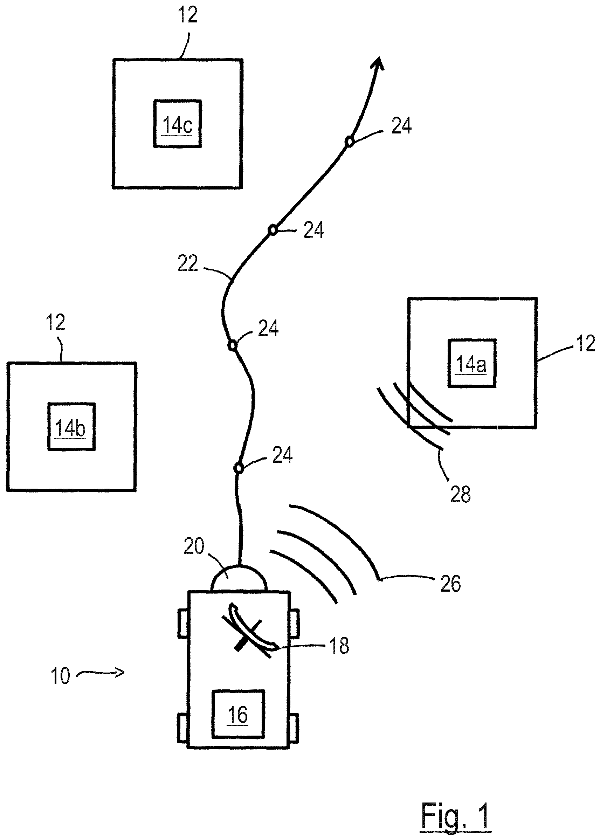

- Fig. 1: eine Positionsbestimmungsvorrichtung, welche sich in der Nähe mehrerer RFID-Tags bewegt.

Fig. 1 zeigt eine Positionsbestimmungsvorrichtung in Form eines selbstfahrenden Fahrzeugs 10, welches sich in der Nähe von drei Objekten 12 befindet. Bei den Objekten 12 kann es sich beispielsweise um Waren in einer Lagerhalle handeln. Die Objekte 12 sind mit einem ersten RFID-Tag 14a, einem zweiten RFID-Tag 14b und einem dritten RFID-Tag 14c versehen, wobei jeweils ein Objekt 12 einen RFID-Tag 14 aufweist.

Das selbstfahrende Fahrzeug 10 umfasst eine Steuereinrichtung 16, einen RFID-Leser 18 mit einer Richtantenne und einen Laserscanner 20. Eine jeweilige Schwenkposition der Richtantenne ist dabei der Steuereinrichtung 16 bekannt. Der Laserscanner 20 dient sowohl dazu, Bewegungen des selbstfahrenden Fahrzeugs 10 zu erfassen, als auch Abstände zu den Objekten 12 zu messen. Der Laserscanner 20 dient somit als Bewegungsbestimmungsvorrichtung und als Abstandsbestimmungseinrichtung.

Das selbstfahrende Fahrzeug 10 bewegt sich entlang einer Fahrroute 22 zwischen den Objekten 12 hindurch, wodurch die in Fig.1 gezeigte Position des selbstfahrenden Fahrzeugs 10 einer Ursprungsposition entspricht. Auf der Fahrroute 22 befinden sich mehrere Messpunkte 24. Auch die dargestellte Ursprungsposition ist ein Messpunkt 24.

Das Vorgehen an einem jeweiligen Messpunkt 24 wird exemplarisch im Folgenden beschrieben. Mittels des RFID-Lesers 18 wird ein Funksignal 26 in eine erste Raumrichtung ausgesandt. In der ersten Raumrichtung befindet sich der erste RFID-Tag 14a. Der erste RFID-Tag 14a wird von dem Funksignal 26 dazu angeregt, ein Antwortsignal 28 auszusenden, welches von dem RFID-Leser empfangen wird.

Anschließend werden wiederholt Funksignale 26 in verschiedene weitere Raumrichtungen ausgesandt, um von sämtlichen RFID-Tags 14 ein Antwortsignal 28 zu erhalten.

Danach rückt das selbstfahrende Fahrzeug 10 an den nächsten Messpunkt 24 vor und das Aussenden der Funksignale 26 in verschiedene Raumrichtungen wird wiederholt. Anhand der an mehreren Messpunkten 24 erhaltenen Antwortsignale 28 und anhand der Bewegung des selbstfahrenden Fahrzeugs 10 stellt die Steuereinrichtung 16 ein Simultaneous-Localisation-and-Mapping-Problem (SLAM-Problem) auf und löst dieses z.B. mittels Graph-basierter Methoden.

Die hierdurch ermittelten Relativpositionen der RFID-Tags 14 und die Ausrichtung des selbstfahrenden Fahrzeugs 10 werden in einer Karte eingetragen, die in der Steuereinrichtung 16 gespeichert ist. Die Karte wird gegebenenfalls zur Anpassung der Fahrroute 22 verwendet und dient dazu, die Positionen der Objekte 12 darzustellen.

Die Karte kann an ein Warenmanagement-System (nicht gezeigt) übermittelt werden und dazu dienen, die mit den RFID-Tags 14 gekennzeichneten Waren schneller aufzufinden.

Der in diesem Text verwendete Begriff des "selbstfahrenden Fahrzeuges" (AGV - Automated Guided Vehicle) umfasst insbesondere auch führerlose Transportsysteme (FTS).

### Bezugszeichenliste

- 10: selbstfahrendes Fahrzeug
- 12: Objekt
- 14a, 14b, 14c: RFID-Tag
- 16: Steuereinrichtung
- 18: RFID-Leser
- 20: Laserscanner
- 22: Fahrroute
- 24: Messpunkt
- 26: Funksignal
- 28: Antwortsignal

## Patentansprüche

1. Positionsbestimmungvorrichtung (10) zur Positionsbestimmung zumindest eines RFID-Tags (14a, 14b, 14c), mit
einem RFID-Leser (18) und einer Steuereinrichtung (16), wobei
die Steuereinrichtung (16) ausgebildet ist, mittels des RFID-Lesers (18) ein Funksignal (26) auszusenden, welches zumindest einen RFID-Tag (14a, 14b, 14c) zur Aussendung eines Antwortsignals (28) anregt, wobei die Positionsbestimmungsvorrichtung (10) von einer Ursprungsposition aus an verschiedene Orte (24) bewegbar ist und die Steuereinrichtung (16) ferner ausgebildet ist,
an zumindest zwei verschiedenen Orten (24) ein jeweiliges Funksignal (26) auszusenden und das jeweilige Antwortsignal (28) oder die jeweiligen Antwortsignale (28) zu empfangen und
anhand eines Abstands der zumindest zwei verschiedenen Orte (24), anhand der Antwortsignale (28) und der Empfangsrichtung der Antwortsignale, welche durch die Funksignale (26) angeregt wurden, die von den zumindest zwei verschiedenen Orten (24) aus ausgesendet wurden, eine Relativposition und eine relative Ausrichtung der Positionsbestimmungsvorrichtung (10) zu der Ursprungsposition und eine Relativposition des RFID-Tags (14a, 14b, 14c) zu der Ursprungsposition zu bestimmen,
**dadurch gekennzeichnet, dass**
der RFID-Leser (18) ausgebildet ist, Funksignale (26) in verschiedene begrenzte Raumrichtungen abzugeben und Antwortsignale (28) aus verschiedenen begrenzten Raumrichtungen zu empfangen, dass
der RFID-Leser (18) eingerichtet ist, eine Empfangsrichtung der Antwortsignale (28) zu ermitteln, indem
der RFID-Leser (18) schwenkbar und/oder bewegbar an der Positionsbestimmungsvorrichtung angebracht ist oder indem
mehrere Antennen für eine Abstrahlung in verschiedene begrenzte Raumrichtungen und/oder für ein Empfangen aus verschiedenen begrenzten Raumrichtungen geeignet verschaltet werden.

2. Positionsbestimmungvorrichtung (10) nach Anspruch 1,
**gekennzeichnet durch**
eine Bewegungsbestimmungsvorrichtung, insbesondere einen Laserscanner (20), eine Ultraschallsensorik, eine Radarabstandssensorik und/oder ein Odometer, welche zur Messung der Bewegung der Positionsbestimmungsvorrichtung (10) dient.

3. Positionsbestimmungvorrichtung (10) nach Anspruch 2,
**dadurch gekennzeichnet, dass**
die Steuereinrichtung (16) ausgebildet ist, die gemessene Bewegung der Positionsbestimmungsvorrichtung (10) zur Berechnung der Relativposition zu verwenden.

4. Positionsbestimmungvorrichtung (10) nach zumindest einem der vorstehenden Ansprüche,
**gekennzeichnet durch**
eine Abstandsbestimmungseinrichtung, insbesondere einen Laserscanner (20), welche Abstände zu Objekten (12) in der Umgebung der Positionsbestimmungsvorrichtung (10) ermittelt.

5. Positionsbestimmungvorrichtung (10) nach zumindest einem der vorstehenden Ansprüche,
**dadurch gekennzeichnet , dass**
der RFID-Leser (18) eine Antenne mit einer Richtcharakteristik umfasst.

6. Positionsbestimmungvorrichtung (10) nach zumindest einem der vorstehenden Ansprüche,
**dadurch gekennzeichnet, dass**
die Steuereinrichtung (16) ausgebildet ist, aus einer Bewegung der Positionsbestimmungsvorrichtung (10) und aus den Antwortsignalen (28) ein Simultaneous-Localization-and-Mapping-Problem zu erstellen und das Simultaneous-Localization-and-Mapping-Problem zu lösen, um die Relativposition und die relative Ausrichtung der Positionsbestimmungsvorrichtung (10) und die Relativposition des RFID-Tags (14a, 14b, 14c) zu der Ursprungsposition zu bestimmen.

7. Positionsbestimmungvorrichtung (10) nach Anspruch 6,
**dadurch gekennzeichnet, dass**
die Steuereinrichtung (16) ausgebildet ist, das Simultaneous-Localizationand-Mapping-Problem anhand einer Graph-basierten Methode zu lösen.

8. Positionsbestimmungvorrichtung (10) nach zumindest einem der vorstehenden Ansprüche,
**dadurch gekennzeichnet, dass**
die Steuereinrichtung (16) ausgebildet ist, eine Karte zu erstellen, die die Position des zumindest einen RFID-Tags (14a, 14b, 14c) und bevorzugt von Objekten (12) in der Umgebung der Positionsbestimmungsvorrichtung (10) zeigt, wobei die Karte bei der Navigation der Positionsbestimmungsvorrichtung (10) verwendet wird.

9. Positionsbestimmungvorrichtung (10) nach zumindest einem der vorstehenden Ansprüche,
**dadurch gekennzeichnet, dass**
sich die Positionsbestimmungvorrichtung (10) autonom bewegt und die Steuereinrichtung (16) ausgebildet ist, die Positionsbestimmungvorrichtung (10) an die zumindest zwei verschiedenen Orte zu bewegen.

10. Verfahren zur Positionsbestimmung zumindest eines RFID-Tags, wobei
mittels eines RFID-Lesers (18) ein Funksignal (26) ausgesendet wird, welches zumindest einen RFID-Tag (14a, 14b, 14c) zur Aussendung eines Antwortsignals (28) anregt,
eine Positionsbestimmungsvorrichtung (10), welche den RFID-Leser (18) trägt, an verschiedene Orte (24) bewegt wird,
an zumindest zwei verschiedenen Orten (24) ein jeweiliges Funksignal (26) ausgesendet und das jeweilige Antwortsignal (28) oder die jeweiligen Antwortsignale (28) empfangen wird/werden und anhand eines Abstands der zumindest zwei verschiedenen Orte und
anhand der Antwortsignale (28) und deren Empfangsrichtung eine Relativposition und eine relative Ausrichtung der Positionsbestimmungsvorrichtung (10) zu dem RFID-Tag (14a, 14b, 14c) bestimmt werden,
**dadurch gekennzeichnet, dass**
der RFID-Leser (18) Funksignale (26) in verschiedene begrenzte Raumrichtungen abgibt und Antwortsignale (28) aus verschiedenen begrenzten Raumrichtungen empfängt, und dass
eine Empfangsrichtung der Antwortsignale (28) ermittelt wird, indem der RFID-Leser (18) schwenkbar und/oder bewegbar an der Positionsbestimmungsvorrichtung angebracht ist oder indem mehrere Antennen geeignet verschaltet werden, um eine Abstrahlung in verschiedene begrenzte Raumrichtungen und/oder ein Empfangen aus verschiedenen begrenzten Raumrichtungen zu erreichen.

11. Verfahren nach Anspruch 10,
**dadurch gekennzeichnet, dass**
mittels einer Bewegungsbestimmungsvorrichtung, insbesondere mittels eines Laserscanners (20) und/oder eines Odometers, eine Messung der Bewegung der Positionsbestimmungsvorrichtung (10) vorgenommen wird.

## Claims

1. A position determination apparatus (10) for the position determination of at least one RFID tag (14a, 14b, 14c), comprising
an RFID reader (18) and a control device (16), wherein
the control device (16) is configured to transmit a radio signal (26) by means of the RFID reader (18), said radio signal (26) exciting at least one RFID tag (14a, 14b, 14c) to transmit a response signal (28); wherein
the position determination apparatus (10) is movable from an original position to different locations (24) and the control device (16) is furthermore configured
to transmit a respective radio signal (26) at at least two different locations (24) and to receive the respective response signal (28) or the respective response signals (28); and
to determine a relative position and a relative alignment of the position determination apparatus (10) with respect to the original position and to determine a relative position of the RFID tag (14a, 14b, 14c) with respect to the original position based on a distance of the at least two different locations (24), based on the response signals (28) and based on the reception direction of the response signals which were excited by the radio signals (26) which were transmitted from the at least two different locations (24),
**characterized in that**
the RFID reader (18) is configured to output radio signals (26) in different, restricted spatial directions and to receive response signals (28) from different, restricted spatial directions; and **in that**
the RFID reader (18) is configured to determine a reception direction of the response signals (28) by
pivotably and/or movably attaching the RFID reader (18) to the position determination apparatus or by
suitably connecting a plurality of antennas for a radiation in different, restricted spatial directions and/or for a reception from different, restricted spatial directions.

2. A position determination apparatus (10) in accordance with claim 1, **characterized by**
a movement determination apparatus, in particular a laser scanner (20), an ultrasound sensor system, a radar distance sensor system and/or an odometer which serves for the measurement of the movement of the position determination apparatus (10).

3. A position determination apparatus (10) in accordance with claim 2, **characterized in that**
the control apparatus (16) is configured to use the measured movement of the position determination apparatus (10) for calculating the relative position.

4. A position determination apparatus (10) in accordance with at least one of the preceding claims,
**characterized by**
a distance determination device, in particular a laser scanner (20), which determines distances from objects (12) in the environment of the position determination apparatus (10).

5. A position determination apparatus (10) in accordance with at least one of the preceding claims,
**characterized in that**
the RFID reader (18) comprises an antenna having a directionality.

6. A position determination apparatus (10) in accordance with at least one of the preceding claims,
**characterized in that**
the control device (16) is configured to prepare a simultaneous localization and mapping problem from a movement of the position determination apparatus (10) and from the response signals (28) and to solve the simultaneous localization and mapping problem to determine the relative position and the relative alignment of the position determination apparatus (10) and to determine the relative position of the RFID tag (14a, 14b, 14c) with respect to the original position.

7. A position determination apparatus (10) in accordance with claim 6, **characterized in that**
the control device (16) is configured to solve the simultaneous localization and mapping problem using a graph-based method.

8. A position determination apparatus (10) in accordance with at least one of the preceding claims,
**characterized in that**
the control device (16) is configured to prepare a map which shows the position of the at least one RFID tag (14a, 14b, 14c) and preferably of objects (12) in the environment of the position determination apparatus (10), with the map being used in the navigation of the position determination apparatus (10).

9. A position determination apparatus (10) in accordance with at least one of the preceding claims,
**characterized in that**
the position determination apparatus (10) moves autonomously and the control device (16) is configured to move the position determination apparatus (10) to the at least two different locations.

10. A method for the position determination of at least one RFID tag,
wherein
a radio signal (26) is transmitted by means of an RFID reader (18) and excites at least one RFID tag (14a, 14b, 14c) to transmit a response signal (28);
a position determination apparatus (10) which carries the RFID reader (18) is moved to different locations (24);
a respective radio signal (26) is transmitted at at least two different locations (24) and the respective response signal (28) or the respective response signals (28) is/are received; and a relative position and a relative alignment of the position determination apparatus (10) with respect to the RFID tag (14a, 14b, 14c) are determined based on a distance of the at least two different locations and based on the response signals (28) and their reception direction,
**characterized in that**
the RFID reader (18) outputs radio signals (26) in different, restricted spatial directions and receives response signals (28) from different, restricted spatial directions; and **in that**
a reception direction of the response signals (28) is determined by pivotably and/or movably attaching the RFID reader (18) to the position determination apparatus or by
suitably connecting a plurality of antennas to achieve a radiation in different, restricted spatial directions and/or a reception from different, restricted spatial directions.

11. A method in accordance with claim 10,
**characterized in that**
a measurement of the movement of the position determination apparatus (10) is carried out by means of a movement determination apparatus, in particular by means of a laser scanner (20) and/or of an odometer.

## Revendications

1. Dispositif de détermination de position (10) pour déterminer la position d'au moins une étiquette RFID (14a, 14b, 14c), comprenant
un lecteur RFID (18) et un moyen de commande (16), le moyen de commande (16) étant réalisé pour émettre, à l'aide du lecteur RFID (18), un signal radio (26) qui excite au moins une étiquette RFID (14a, 14b, 14c) pour émettre un signal de réponse (28),
dans lequel
le dispositif de détermination de position (10) est mobile depuis une position initiale jusqu'à différents emplacements (24), et
le moyen de commande (16) est en outre réalisé pour
émettre un signal radio respectif (26) et pour recevoir le signal de réponse respectif (28) ou les signaux de réponse respectifs (28), à au moins deux emplacements différents, et
déterminer une position relative et une orientation relative du dispositif de détermination de position (10) par rapport à la position initiale et une position relative de l'étiquette RFID (14a, 14b, 14c) par rapport à la position initiale sur la base d'une distance desdits au moins deux emplacements différents (24), sur la base des signaux de réponse (28) et sur la base de la direction de réception des signaux de réponse qui ont été excités par les signaux radio (26) qui ont été émis depuis lesdits au moins deux emplacements différents (24),
**caractérisé en ce que**
le lecteur RFID (18) est réalisé pour émettre des signaux radio (26) dans différentes directions spatiales limitées et pour recevoir des signaux de réponse (28) depuis différentes directions spatiales limitées, **en ce que** le lecteur RFID (18) est conçu pour détecter une direction de réception des signaux de réponse (28) du fait que le lecteur RFID (18) est monté de manière pivotante et/ou mobile sur le dispositif de détermination de position, ou du fait que plusieurs antennes sont interconnectées de façon appropriée pour un rayonnement dans différentes directions spatiales limitées et/ou pour une réception depuis différentes directions spatiales limitées.

2. Dispositif de détermination de position (10) selon la revendication 1, **caractérisé par**
un dispositif de détermination de mouvement, en particulier un scanneur laser (20), un système de détection à ultrasons, un système de détection de distance radar et/ou un odomètre, qui sert à mesurer le mouvement du dispositif de détermination de position (10).

3. Dispositif de détermination de position (10) selon la revendication 2, **caractérisé en ce que**
le moyen de commande (16) est réalisé pour utiliser le mouvement mesuré du dispositif de détermination de position (10) pour calculer la position relative.

4. Dispositif de détermination de position (10) selon l'une au moins des revendications précédentes,
**caractérisé par**
un dispositif de détermination de distance, en particulier un scanneur laser (20), qui détecte les distances par rapport à des objets (12) se trouvant à proximité du dispositif de détermination de position (10).

5. Dispositif de détermination de position (10) selon l'une au moins des revendications précédentes,
**caractérisé en ce que**
le lecteur RFID (18) comprend une antenne à directivité.

6. Dispositif de détermination de position (10) selon l'une au moins des revendications précédentes,
**caractérisé en ce que**
le moyen de commande (16) est réalisé pour créer un problème de localisation et de cartographie simultanées à partir d'un mouvement du dispositif de détermination de position (10) et des signaux de réponse (28) et pour résoudre le problème de localisation et de cartographie simultanées afin de déterminer la position relative et l'orientation relative du dispositif de détermination de position (10) et la position relative de l'étiquette RFID (14a, 14b, 14c) par rapport à la position initiale.

7. Dispositif de détermination de position (10) selon la revendication 6, **caractérisé en ce que**
le moyen de commande (16) est réalisé pour résoudre le problème de localisation et de cartographie simultanées à l'aide d'une méthode basée sur un graphe.

8. Dispositif de détermination de position (10) selon l'une au moins des revendications précédentes,
**caractérisé en ce que**
le moyen de commande (16) est réalisé pour créer une carte montrant la position de ladite au moins une étiquette RFID (14a, 14b, 14c) et de préférence la position d'objets (12) à proximité du dispositif de détermination de position (10), la carte étant utilisée lors de la navigation du dispositif de détermination de position (10).

9. Dispositif de détermination de position (10) selon l'une au moins des revendications précédentes,
**caractérisé en ce que**
le dispositif de détermination de position (10) se déplace de façon autonome, et le moyen de commande (16) est réalisé pour déplacer le dispositif de détermination de position (10) jusqu'auxdits au moins deux emplacements différents.

10. Procédé de détermination de position d'au moins une étiquette RFID,
dans lequel
un signal radio (26) est émis à l'aide d'un lecteur RFID (18), signal qui excite au moins une étiquette RFID (14a, 14b, 14c) pour émettre un signal de réponse (28),
un dispositif de détermination de position (10) qui porte le lecteur RFID (18) est déplacé jusqu'à différents emplacements (24), et
un signal radio respectif (26) est émis et le signal de réponse respectif (28) ou les signaux de réponse respectifs (28) est/sont reçu(s), à au moins deux emplacements différents (24), et
une position relative et une orientation relative du dispositif de détermination de position (10) par rapport à l'étiquette RFID (14a, 14b, 14c) sont déterminées sur la base d'une distance desdits au moins deux emplacements différents et sur la base des signaux de réponse (28) et de leur direction de réception,
**caractérisé en ce que**
le lecteur RFID (18) émet des signaux radio (26) dans différentes directions spatiales limitées et reçoit des signaux de réponse (28) depuis différentes directions spatiales limitées, et **en ce que**
une direction de réception des signaux de réponse (28) est détectée du fait que le lecteur RFID (18) est monté de manière pivotante et/ou mobile sur le dispositif de détermination de position, ou du fait que plusieurs antennes sont interconnectées de façon appropriée pour obtenir un rayonnement dans différentes directions spatiales limitées et/ou une réception depuis différentes directions spatiales limitées.

11. Procédé selon la revendication 10,
**caractérisé en ce que**
une mesure du mouvement du dispositif de détermination de position (10) est effectuée à l'aide d'un dispositif de détermination de mouvement, en particulier à l'aide d'un scanneur laser (10) et/ou d'un odomètre.
